# FASCICULE DE BREVET EUROPEEN

(11) **EP 4 296 760 B1**
(45) Date de publication et mention de la délivrance du brevet: **15.04.2026**
(21) Numéro de dépôt: 23179605.3
(22) Date de dépôt: 15.06.2023
(51) Int. Cl.: G02C 1/02, G02C 5/02, G02C 5/14

(54) **PAIRE DE LUNETTES A PION DE VERROUILLAGE ET PROCEDE DE MONTAGE CORRESPONDANT**
BRILLE MIT VERRIEGELUNGSSTIFT UND MONTAGEVERFAHREN DAFÜR
PAIR OF SPECTACLES WITH LOCKING PIN AND CORRESPONDING MOUNTING METHOD

(30) Priorité: 22.06.2022 FR 2206212
(43) Date de publication de la demande: 27.12.2023
(73) Titulaire: Minima, 91310 Linas (FR)
(72) Inventeur: DELAME, Julien, 91220 LE PLESSIS PATÉ (FR)
(74) Mandataire: Cabinet Boettcher

(56) Documents cités:
- CH-A2- 710 997
- FR-A1- 2 828 744
- JP-A- H11 271 688
- US-A- 5 847 800
- US-A- 5 946 072

## Description

L'invention concerne une paire de lunettes comprenant un élément de lunettes associé à un pion de verrouillage. L'invention concerne également un procédé de montage d'un élément de lunettes sur une telle paire de lunettes.

### ARRIERE PLAN DE L'INVENTION

Une monture de lunettes comporte généralement des tenons dont sont solidaires des branches. Les tenons comportent une première portion d'extrémité fixée à une partie frontale de la monture et une deuxième portion d'extrémité opposée, dans le prolongement de laquelle s'étend la branche.

Les deux portions d'extrémité du tenon peuvent être articulées l'une à l'autre par une charnière permettant le pivotement de la branche entre une position de rangement dans laquelle la branche s'étend parallèlement au verre et une position d'utilisation dans laquelle la branche s'étend perpendiculairement au verre. Il existe des montures dans laquelle la branche est d'une seule pièce avec la deuxième portion d'extrémité, la liaison de la branche au tenon se faisant au niveau de la charnière, et des montures dans lesquelles la branche est rapportée sur la deuxième portion.

Classiquement, la première portion d'extrémité du tenon est emmanchée à force dans un logement de la partie frontale de la monture selon un sens d'introduction perpendiculaire au verre. De la sorte, le tenon se retrouve solidarisé à la monture au niveau d'une des faces principales de la monture.

L'inconvénient est qu'il est alors très difficile voire impossible de retirer le tenon de la monture.

Or, avec le temps, les paires de lunettes ont été peu à peu débarrassées de leur seule image de prothèse optique pour revêtir également celle d'un accessoire de mode à part entière dont on attend qu'il habille le visage de leur porteur. En parallèle s'est développée une offre très importante de formes et de couleurs de lunettes.

Ainsi, le montage par force du tenon n'est plus en adéquation avec un besoin de changement rapide des différents éléments d'une paire de lunettes si l'un d'entre eux ne convenait pas.

Un document de l'état de la technique montrant un mécanisme pour lunettes sans monture dans lequel les verres peuvent être maintenus fermement en place sans fluctuation grâce à une structure simple est le document US5847800A.

### OBJET DE L'INVENTION

Un but de l'invention est de proposer une monture de lunettes plus aisément démontable ainsi qu'un procédé correspondant.

### RESUME DE L'INVENTION

A cet effet, on prévoit, selon l'invention une paire de lunettes comprenant un élément de lunettes monté sur une monture de ladite paire de lunettes ou sur un verre de ladite paire de lunettes, le verre ou la monture comportant au moins un orifice pourvu d'une portion d'introduction pour l'introduction de l'élément à travers l'orifice, portion d'introduction prolongée par une portion rétrécie de positionnement de l'élément dans le verre ou la monture, la paire de lunettes comprenant par ailleurs un pion de verrouillage agencé dans l'orifice de sorte à s'étendre au moins à travers la portion d'introduction entre l'élément d'une part et le verre ou la monture d'autre part pour bloquer l'élément dans la paire de lunettes.

Ainsi, pour monter l'élément de lunettes, il suffit d'introduire l'élément à travers l'orifice au niveau de la portion d'introduction puis de déplacer l'élément de lunettes relativement au verre ou à la monture de sorte que l'élément de lunettes s'avance dans la portion rétrécie de l'orifice à savoir la portion de positionnement. On vient alors rapporter le pion de verrouillage dans la portion d'introduction de sorte à bloquer l'élément de lunettes dans la portion de positionnement.

Pour retirer l'élément de lunettes, il suffit en conséquence de retirer le pion de verrouillage puis de déplacer l'élément de lunettes relativement au verre ou à la monture de sorte que l'élément de lunettes s'avance dans la portion d'introduction. Il est alors possible de sortir l'élément de lunettes de la monture ou du verre.

L'invention permet ainsi simplement de monter de manière temporaire l'élément de lunettes sur la monture ou sur le verre.

Il s'avère donc aisé de désolidariser l'élément de lunettes du reste de la paire de lunettes notamment du fait que l'élément de lunettes n'est pas emmanché à force dans ladite paire de lunettes.

Ceci permet de changer plus facilement un élément de lunettes s'il ne convenait pas à un utilisateur pour en agencer un autre sur la monture ou le verre de la paire de lunettes considérée.

Optionnellement, l'élément de lunettes est un tenon ou un pontet.

Optionnellement, l'orifice est conformé en un trou de serrure.

Optionnellement, la portion de positionnement est agencée plus vers l'extérieur du verre ou de la monture que la portion d'introduction.

Optionnellement, le pion de verrouillage recouvre au moins en partie une portion de l'élément dépassant d'une face avant de la paire de lunettes.

Optionnellement le pion de verrouillage comporte au moins un logement dans lequel est reçu la portion de l'élément. Optionnellement le pion de verrouillage comporte au moins une surface complémentaire d'au moins une surface de l'élément de lunettes.

Optionnellement le pion de verrouillage et l'élément de lunettes s'emboitent au moins en partie l'un dans l'autre. Optionnellement l'élément de lunettes comporte un doigt conformé pour épouser au moins en partie la forme d'un bord latéral de la portion de positionnement.

Optionnellement l'élément comporte un doigt conformé pour épouser au moins en partie la forme d'un bord latéral de la portion de positionnement.

Optionnellement le pion de verrouillage comporte une partie d'attache dont l'extrémité libre est au moins en partie biseautée.

L'orifice est ménagé de sorte à déboucher sur une face avant du verre ou de la monture et sur une face arrière du verre ou de la monture.

Optionnellement, l'orifice n'est débouchant qu'au niveau de la face avant et de la face arrière. L'orifice n'est alors pas débouchant sur l'un des bords externes du verre ou de la monture.

Le pion de verrouillage bloque l'élément de lunettes dans la portion de positionnement.

L'élément de lunettes est en appui contre au moins un bord de l'orifice et optionnellement contre au moins un bord de la portion de positionnement. L'invention concerne également un procédé de montage d'un élément de lunettes sur une paire de lunettes telle que précédemment décrite, le procédé comportant les étapes de :
- agencer l'élément de lunettes à travers la portion d'introduction,
- déplacer l'élément de lunettes le long de l'orifice de sorte qu'il s'étende à travers la portion de positionnement,
- placer le pion de verrouillage au niveau de la portion d'introduction.

D'autres caractéristiques et avantages de l'invention ressortiront à la lecture de la description qui suit.

### BREVE DESCRIPTION DES DESSINS

Il sera fait référence aux dessins annexés, parmi lesquels :
[Fig. 1] La figure 1 est une vue en perspective éclatée d'une partie d'une paire de lunettes selon un mode de réalisation particulier de l'invention ;
[Fig. 2a] La figure 2a illustre schématiquement une première étape de montage d'un premier élément de lunettes sur la paire de lunettes illustrée à la figure 1 ;
[Fig. 2b] La figure 2b illustre schématiquement une deuxième étape de montage du premier élément de lunettes sur la paire de lunettes illustrée à la figure 1 ;
[Fig. 2c] La figure 2c illustre schématiquement une troisième étape de montage du premier élément de lunettes sur la paire de lunettes illustrée à la figure 1 ;
[Fig. 3a] La figure 3a illustre schématiquement une première étape de montage d'un deuxième élément de lunettes sur la paire de lunettes illustrée à la figure 1 ;
[Fig. 3b] La figure 3b illustre schématiquement une deuxième étape de montage du deuxième élément de lunettes sur la paire de lunettes illustrée à la figure 1 ;
[Fig. 3c] La figure 3c illustre schématiquement une troisième étape de montage du deuxième élément de lunettes sur la paire de lunettes illustrée à la figure 1,

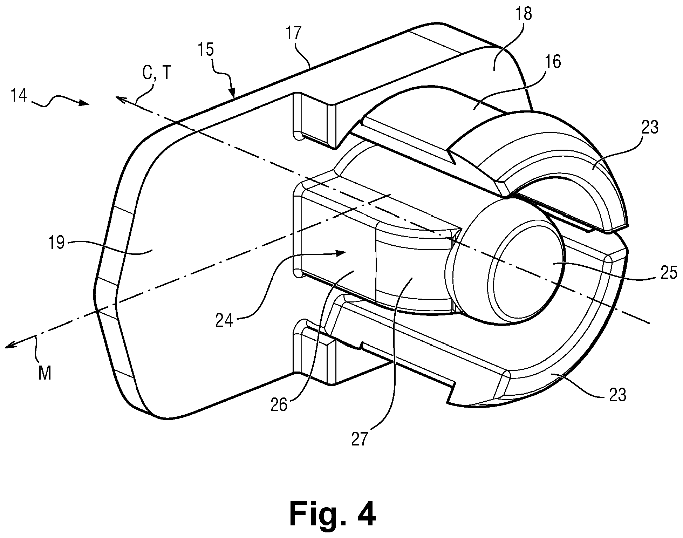

[Fig. 4] La figure 4 est une vue en perspective d'un pion de la paire de lunettes illustrée à la figure 1,
[Fig. 5] La figure 5 est une vue en perspective d'une première variante de la paire de lunettes illustrée à la figure 1,
[Fig. 6] La figure 6 est une vue en perspective d'une deuxième variante de la paire de lunettes illustrée à la figure 1,
[Fig. 7] La figure 7 est une vue en perspective d'une troisième variante de la paire de lunettes illustrée à la figure 1,
[Fig. 8] La figure 8 illustre schématiquement deux possibilités d'orientation d'un orifice de la paire de lunettes représentée à la figure 1,
[Fig. 9] La figure 9 illustre schématiquement deux possibilités de montage d'un élément de lunettes sur la paire de lunettes représentée à la figure 1,
[Fig. 10] La figure 10 est une vue de face schématique permettant de mieux visualiser la coopération entre l'élément de lunettes et le pion de la paire de lunettes représentée à la figure 1,
[Fig. 11] La figure 11 est une vue de face schématique proposant une première alternative à la coopération entre l'élément de lunettes et le pion proposée à la figure 10,
[Fig. 12] La figure 12 est une vue de face schématique proposant une deuxième alternative à la coopération entre l'élément de lunettes et le pion proposée à la figure 10,
[Fig. 13] La figure 13 est une vue de face schématique proposant une troisième alternative à la coopération entre l'élément de lunettes et le pion proposée à la figure 10,
[Fig. 14a] La figure 14a est une vue en perspective éclatée d'une quatrième variante de la paire de lunettes illustrée à la figure 1,
[Fig. 14b] La figure 15b est une vue en perspective de la paire de lunettes illustrée à la figure 14a,
[Fig. 15a] La figure 15a est une vue en perspective éclatée d'une cinquième variante de la paire de lunettes illustrée à la figure 1,
[Fig. 15b] La figure 15b est une vue en perspective de la paire de lunettes illustrée à la figure 15a,
[Fig. 16a] La figure 16a est une vue en perspective éclatée d'une sixième variante de la paire de lunettes illustrée à la figure 1,
[Fig. 16b] La figure 16b est une vue en perspective de la paire de lunettes illustrée à la figure 16a,
[Fig. 17a] La figure 17a est une vue en perspective éclatée d'une septième variante de la paire de lunettes illustrée à la figure 1,
[Fig. 17b] La figure 17b est une vue en perspective de la paire de lunettes illustrée à la figure 17a,
[Fig. 17c] La figure 17c est une vue en perspective d'une alternative à la paire de lunettes illustrée à la figure 17a.

### DESCRIPTION DETAILLEE DE L'INVENTION

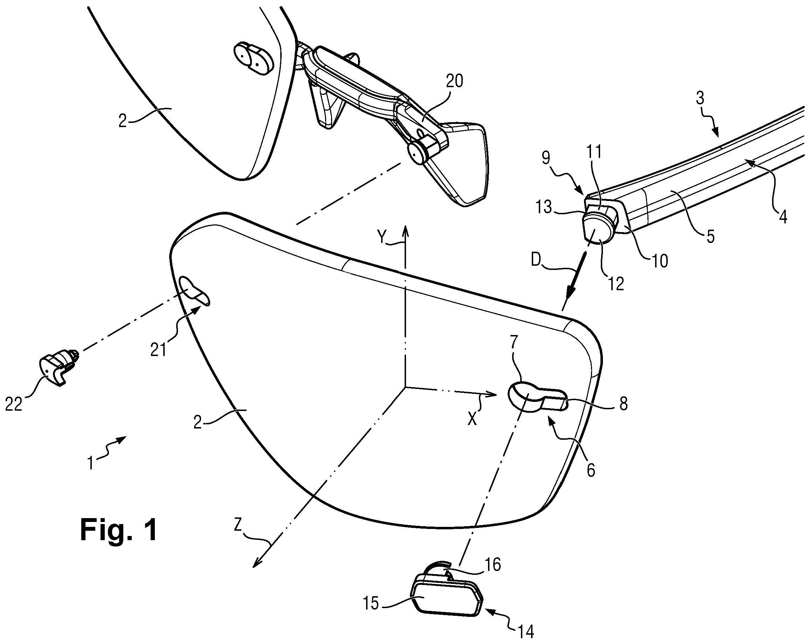

En référence à la figure 1, il est visible une paire de lunettes 1 comprenant deux verres 2. La paire de lunettes 1 est ici dépourvue de monture, les deux verres 2 étant reliés entre eux par au moins un élément de lunettes qui sera décrit plus bas.

On peut ainsi définir une face arrière et une face avant à la paire de lunettes 1 correspondant respectivement à la face tournée vers le visage du porteur de la paire de lunettes et la face opposée.

Les verres 2 ont une structure identique sauf en ce que l'un est le symétrique de l'autre par rapport à un plan médian de la paire de lunettes 1. Dans la suite de la description, ne sera mentionné qu'un verre renvoyant indifféremment à l'un ou l'autre des verres.

Par ailleurs, la paire de lunettes 1 comporte deux ensembles latéraux 3 reliés respectivement au verre droit et au verre gauche de la paire de lunettes. Les termes « droit » et « gauche » sont à entendre dans le référentiel du porteur de la paire de lunettes lorsqu'il porte ladite paire de lunettes.

Les ensembles latéraux 3 ont une structure identique sauf en ce que l'un est le symétrique de l'autre par rapport à un plan médian de la paire de lunettes. Dans la suite de la description, ne sera mentionné qu'un ensemble 3 renvoyant indifféremment à l'un ou l'autre ensemble latéral.

Chaque ensemble latéral 3 comprend une première pièce et une deuxième pièce reliées l'une à l'autre. Dans le mode de réalisation décrit, la première pièce est un tenon 4 et la deuxième pièce est une branche (non visible ici).

Le tenon 4 comporte une première partie 5 et une deuxième partie (non visible ici) reliées par une charnière comportant un axe d'articulation solidaire de la première partie 5 et permettant ainsi le pivotement de la branche entre une position de rangement dans laquelle la branche s'étend parallèlement au verre 2 et une position d'utilisation dans laquelle la branche s'étend perpendiculairement au verre 2.

Un orifice 6 est ménagé dans le verre 2 associé à l'ensemble latéral 3 considéré. L'orifice 6 est ménagé de sorte à être traversant : l'orifice 6 débouche ainsi sur la face avant et sur la face arrière du verre 2 (correspondant respectivement à la face avant de la paire de lunettes 1 et à la face arrière de la paire de lunettes 1). En conséquence, l'orifice 6 est traversant dans l'épaisseur du verre 2 (épaisseur considérée selon un premier axe Z).Les orifices 6 des verres 2 gauche et droit sont ici identiques sauf en ce que l'un est le symétrique de l'autre par rapport à un plan médian de la paire de lunettes 1. Dans la suite de la description, ne sera mentionné qu'un seul orifice 6 renvoyant indifféremment à l'un ou l'autre orifices 6.

L'orifice 6 comporte une portion d'introduction 7 qui est prolongée par une portion rétrécie formant portion de positionnement 8. L'orifice 6 s'étend ainsi longitudinalement dans le verre 2 selon un deuxième axe X (qui est orthogonal au premier axe Z), la portion de positionnement 8 s'étendant dans le prolongement de la portion d'introduction 7 selon ledit deuxième axe X.

Typiquement, l'orifice 6 est conformé de sorte que la portion d'introduction 7 se trouve à droite de la portion de positionnement 8 pour le verre 2 gauche et/ou de sorte que la portion d'introduction se trouve à gauche de la portion de positionnement pour le verre 2 droit.

L'orifice 6 est par exemple conformé en un trou de serrure. L'orifice 6 est par exemple conformé de sorte à s'étendre longitudinalement selon le deuxième axe X en se rétrécissant en direction d'un bord externe du verre 2 (gauche pour le verre 2 gauche et droite pour le verre droit 2) i.e. de la tranche du verre 2. Les termes « externe » et « interne » doivent s'entendre dans le référentiel de l'utilisateur lorsque la paire de lunettes 1 est portée par l'utilisateur : « externe » renvoyant aux côtés gauche et droit de la paire de lunettes 1 et « interne » renvoyant au côté faisant face à l'autre verre 2.

La portion d'introduction 7 est ici de section au moins partiellement circulaire (selon un plan de section de normale le premier axe Z) et/ou la portion de positionnement est de section au moins partiellement oblongue (selon un plan de section de normale le premier axe Z) avec une première extrémité latérale de la portion de positionnement 8 débouchant dans la portion d'introduction 7. Optionnellement la portion de positionnement 8 ne s'évase pas en direction de sa deuxième extrémité latérale et/ou ne rétrécit pas en direction de sa deuxième extrémité latérale. Ainsi, de préférence la portion de positionnement 8 présente deux bords longitudinaux parallèles entre eux et au deuxième axe X.

L'orifice 6 est par exemple ménagé en partie supérieure du verre 2, les termes « supérieur » et « inférieur » étant à entendre dans le référentiel de l'utilisateur lorsque la paire de lunettes 1 est portée par l'utilisateur.

L'orifice 6 est par exemple ménagé au niveau du bord externe du verre 2. Optionnellement l'orifice 6 est ménagé de sorte que la portion de positionnement 8 soit plus proche du bord externe que la portion d'introduction 7.

L'orifice 6 est donc ménagé côté bord externe du verre 2 en extrémité supérieure dudit bord externe.

Optionnellement, lorsque la paire de lunettes 1 est portée, l'orifice 6 s'étend sensiblement à l'horizontale.

On note que l'orifice 6 n'est pas débouchant autrement que sur les faces avant et arrière de la paire de lunettes 1. En particulier, l'orifice 6 ne débouche pas sur un bord externe du verre 2. La section transversale de l'orifice 6 (de normale le premier axe Z) est ainsi fermée. En particulier, ni la portion de positionnement 8 ni la portion d'introduction 7 ne débouche sur un bord externe du verre 2.

La première partie 5 du tenon 4 de l'ensemble latéral 3 comporte par ailleurs des moyens de sa fixation au reste de la paire de lunettes 1, moyens de fixation qui forment ainsi ici l'extrémité libre de la première partie 5. A cet effet, lesdits moyens de fixation sont conformés pour être reçus dans l'orifice 6.

De manière particulière, l'extrémité libre 9 de la première partie 5 du tenon 4 de l'ensemble latéral 3 présente une zone d'attache 10 destinée à venir en regard de la face arrière du verre 2. De préférence, la zone d'attache 10 est conformée pour épouser la forme de la face arrière du verre 2. De préférence, la zone d'attache 10 est conformée pour venir reposer au moins en partie contre la face arrière du verre 2. Typiquement la zone d'attache 10 comporte au moins une face de courbure similaire à celle de la zone de la face arrière du verre 2 contre laquelle la zone d'attache 10 est accolée. Dans le cas présent, la zone d'attache 10 est une unique face continue plane ou courbe.

Ladite zone d'attache 10 est prolongée d'un doigt 11 de fixation au verre 2, doigt faisant partie des moyens de fixation susnommés.

Ledit doigt 11 s'étend ainsi à partir de la zone d'attache 10 en direction opposée au tenon 5. Par exemple, le doigt 11 s'étend rectilignement à partir de ladite zone d'attache 10 selon un axe D. La zone d'attache présente une surface plus importante qu'une section transversale du doigt de fixation (selon un plan de section normal à l'axe D).

Le doigt 11 est ici conformé de sorte à présenter une section (selon un plan de section normal à l'axe D) au moins en partie arrondie.

Le doigt 11 est conformé pour pouvoir être loger dans la portion de positionnement 8. En conséquence, la section du doigt 11 présente une forme épousant au moins en partie celle de la portion de positionnement 8. Dans le cas présent, la section du doigt 11 est de forme oblongue.

Le doigt 11 présente une longueur (selon l'axe D) sensiblement également à celle de l'épaisseur du verre 2 (selon le premier axe Z).

Le doigt 11 est prolongé d'un plateau 12. Ledit plateau 12 s'étend dans un plan de normale l'axe D. Selon un plan de section de normale l'axe D, le plateau 12 présente une section de forme similaire à celle de la section du doigt 11. Selon un plan de section de normale l'axe D, le plateau 12 présente une section de surface supérieure à celle du doigt 11. Le plateau 12 s'étend ici parallèlement à la zone d'attache 10.

De manière particulière, le plateau 12 est destiné à venir en regard de la face avant du verre 2. De préférence, au moins une face principale arrière du plateau 12 (celle raccordée au doigt 11) est conformée pour épouser la forme de la face avant du verre 2. De préférence, ladite face est conformée pour venir reposer au moins en partie contre la face avant du verre 2. Typiquement ladite face présente une courbure similaire à celle de la zone de la face avant du verre 2 contre laquelle le plateau 12 est accolé. Dans le cas présent, le plateau 12 comporte une unique face arrière continue plane ou courbe.

Le plateau 12, le doigt 11 et la première partie 5 du tenon 4 de l'ensemble latéral 3 forment un tout unitaire. Le plateau 12, le doigt 11 et la première partie 5 du tenon 4 de l'ensemble latéral 3 sont ici d'une seule pièce.

De préférence, le doigt 11 et le plateau 12 présentent tous deux un méplat. Typiquement, le doigt 11 et le plateau 12 présentent un même méplat 13 qui s'étend ainsi rectilignement le long du doigt 11 et du plateau 12 selon l'axe D. Par exemple le méplat 13 s'étend depuis la zone d'attache 10 jusqu'à une face principale libre du plateau 12 (opposée à celle raccordée au doigt 11 i.e. la face principale arrière). Le doigt 11 et le plateau 12 présentent ainsi une même face plane. Ladite face plane s'étend parallèlement à l'axe D.

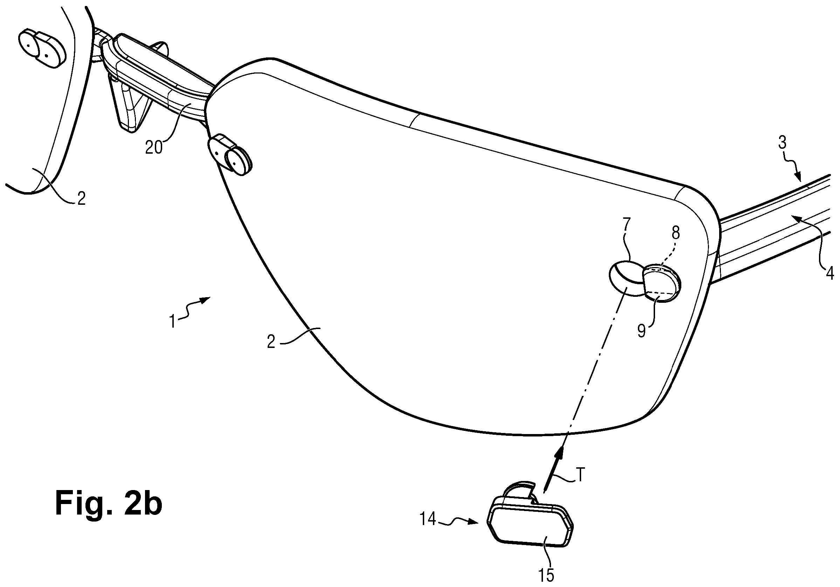

Comme plus visible à la figure 2b, lorsque l'extrémité libre 9 est en place dans la paire de lunettes 1, elle s'étend à travers l'orifice 6 de sorte que la zone d'attache 10 soit en appui contre la face arrière du verre 2 et que la face principale arrière du plateau 12 soit en appui contre la face avant du verre 2. Quant au doigt 11, il s'étend dans l'orifice 6. De préférence, le doigt 11 s'étend 6 dans l'orifice de sorte que l'axe D soit parallèle au premier axe Z.

Plus précisément, le doigt 11 s'étend à travers la portion de positionnement 8 de l'orifice 6. Plus précisément encore, le doigt 11 s'étend à travers la portion de positionnement 8 de l'orifice 6 de sorte à être en butée contre la deuxième extrémité latérale de la portion de positionnement 8.

Dans cette position, le méplat 13 est tourné vers la portion d'introduction 7. Le reste du doigt 11 épouse alors la forme de la deuxième extrémité latérale de la portion de positionnement 8.

Afin de bloquer l'extrémité libre 9 dans le verre 2, la paire de lunettes 1 est équipée d'un pion de verrouillage 14.

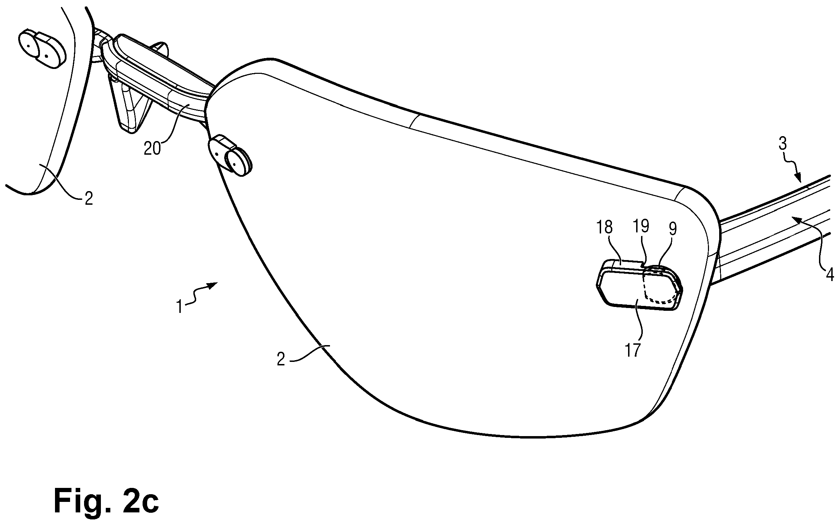

Celui-ci comporte un cache 15 pourvu d'une partie d'attache 16. Comme visible à la figure 2c, lorsque le pion 14 est en place dans la paire de lunettes 1, la partie d'attache 16 s'étend à travers l'orifice 6 et le cache 15 s'étend à l'avant de la face avant du verre 2.

Le cache 15 est ici conformé en une plaquette. Le cache 15 présente ainsi une première face principale 17 et une deuxième face principale 18 opposée à la première face principale 17, la partie d'attache 16 s'étendant à partir de la deuxième face principale 18. Dans le cas présent, le cache 15 est destiné à venir en regard de la face avant du verre 2. De préférence, la deuxième face principale 18 est au moins partiellement conformée pour épouser la forme de la face avant du verre 2. De préférence, ladite deuxième face principale 18 est conformée pour venir reposer au moins en partie contre la face avant du verre 2. Typiquement ladite deuxième face principale 18 présente au moins une zone de courbure similaire à celle de la zone de la face avant du verre 2 contre laquelle elle est accolée. Dans le cas présent, le cache 15 comporte une unique deuxième face principale 18 continue plane ou courbe.

La première face principale 17 est ainsi visible pour une personne regardant le porteur de la paire de lunettes 1.

Au moins la première face principale 17 est conformée en un polygone. Par exemple la première face principale 17 est conformée en un hexagone (régulier ou non) ou en un pentagone (régulier ou non) ou en un quadrilatère (régulier ou non). Par exemple la première face principale 17 est conformée en un carré ou un rectangle. Optionnellement les angles de la première face principale 17 sont arrondis.

La première face principale 17 est ici plane ou courbe.

La première face principale 17 s'étend ici parallèlement à la deuxième face principale 18.

De préférence, le cache 15 présente un méplat 19. Typiquement, le méplat 19 est ménagé dans l'épaisseur du cache 15 (épaisseur considérée selon un axe C s'étendant entre les deux faces principales 17, 18 - optionnellement l'axe C est une normale audites deux faces principales 17, 18) : le méplat 19 est débouchant au niveau de la deuxième face principale 18 de sorte à la raccourcir mais n'est pas débouchant au niveau de la première face principale 17.

Ainsi le méplat 19 est invisible pour une personne regardant en face le porteur de la paire de lunettes 1. Le méplat 19 s'étend rectilignement le long du cache 15 selon un axe M (orthogonal à l'axe C). Le méplat 19 est donc également débouchant sur l'un des bords latéraux du cache (le bord gauche pour le pion associé au verre 2 gauche et le bord droit pour le pion associé au verre 2 droit).

La partie d'attache 16 s'étend rectilignement à partir de la deuxième face principale 18 selon un axe T. Optionnellement, l'axe T est une normale à la deuxième face principale 18 et/ou est confondu avec l'axe C.

La partie d'attache 16 est d'une longueur (considérée selon l'axe T) supérieure à celle de la profondeur (selon le premier axe Z) de l'orifice 6 de sorte à dépasser de la face arrière du verre 2 lorsque le pion 14 est en place dans l'orifice 6.

La partie d'attache 16 comporte ici au moins une languette. Par exemple, la partie d'attache comporte au moins deux languettes 23. Chaque languette 23 est conformée en un arc de cercle. De préférence les languettes 23 sont agencées de manière concentrique de sorte à dessiner conjointement un tube s'étendant selon l'axe T. Les languettes 23 étant radialement espacées les unes des autres, le tube s'avère donc discontinu. De préférence, le tube dessiné par les languettes 23 présente une courbure identique à celle de la portion d'introduction 7. De préférence, le tube dessiné par les languettes 23 est conformé pour épouser une première extrémité latérale de la portion d'introduction 7 (opposée à celle débouchant dans la portion de positionnement 8).

La partie d'attache 16 comprend également une cale 24. La cale 24 est ici de longueur (considérée selon l'axe T) plus petite que celle des languettes 23. De préférence, la cale 24 est plus proche du méplat 19 du cache 15 que les languettes 23. De préférence, la cale 24 est d'une longueur inférieure à la profondeur (considérée selon le premier axe Z) de l'orifice 6.

Optionnellement un téton 25 s'étend rectilignement selon l'axe T depuis le centre du tube dessiné par les languettes 23 vers l'extérieur du pion 14. Le téton 25 s'étend coaxialement au tube dessiné par les languettes 23. Le téton 25 s'étend sur une longueur (considérée selon l'axe T) inférieure à celles des languettes 23 mais supérieure à celle de la cale 24.

La cale 24 s'étend longitudinalement le long du téton 25 en étant solidaire dudit téton 25. La cale 24 est ainsi d'un seul tenant avec le téton 25. En revanche, les languettes 23 s'étendent à distance du téton 25.

Dans le cas présent, seules les languettes 23 et le téton 25 de la partie d'attache 16 ressortent de l'orifice 6 par la face arrière du verre 2 lorsque le pion 14 est en place dans la paire de lunettes.

Optionnellement la cale 24 comporte une partie plane 26 formant partie du méplat 19 du cache 15. La partie plane 26 s'étend ici rectilignement au-delà du cache 15. La hauteur du méplat 19 du cache 15 (considérée selon l'axe C) est sensiblement égale à l'épaisseur du plateau 12 (considérée selon l'axe D).

De préférence, l'extrémité libre de la partie d'attache 16 est au moins partiellement biseautée. L'extrémité libre de la partie d'attache 16 présente ainsi au moins une zone formant un plan incliné vis-à-vis de l'axe T.

Le biseautage facilite l'insertion du pion 14 dans l'orifice 6 une fois l'extrémité libre insérée dans l'orifice 6.

Typiquement l'extrémité libre d'au moins l'une des languettes 23 est biseautée en direction du téton 25 et en direction opposée du cache 15 et/ou la cale 24 comporte une partie courbe 27 prolongeant la partie plane 24 jusqu'au téton 25 (partie courbe s'étendant donc en direction du téton 25 et en direction opposée du cache).

La partie d'attache 16 est solidaire du cache 15 et est par exemple d'une seule pièce avec le cache 15.

Comme plus visible à la figure 2c, lorsque le pion 14 est en place dans la paire de lunettes 1, il s'étend à travers l'orifice 6 de sorte que la première face principale 17 du cache 14 soit visible pour une personne regardant le porteur de la paire de lunettes 1, que la deuxième face principale 18 du cache 14 soit en appui contre la face avant du verre 2 et que la partie d'attache 16 s'étende à travers la portion d'introduction 7 depuis la face avant du verre 2 jusqu'à dépasser partiellement de la face arrière du verre 2.

Les languettes 23 sont agencées en vis-à-vis de la première extrémité latérale de la portion d'introduction 7. Plus précisément, la partie d'attache 16 s'étend à travers la portion d'introduction 7 de sorte que les languettes 23 se trouvent en butée contre la première extrémité latérale de la portion d'introduction 7.

Dans cette position, le méplat 19 est tourné vers la portion de positionnement 8 (et vers le méplat 13 du doigt 11) et est optionnellement accolé au méplat 13 du doigt 11.

Le reste de la portion d'attache 16 épouse alors la forme de la portion d'introduction 7.

Le téton 25 s'étend quant à lui le long de la jonction entre la portion d'introduction 7 et la portion de positionnement 8. Le téton s'étend ainsi le long du méplat 13 du doigt 11.

Par ailleurs, le cache 15 vient recouvrir le plateau 12. Une personne regardant de face le porteur de la paire de lunettes 1 ne voit donc pas le plateau 12 puisque le cache 15 le recouvre. Plus exactement ici, le plateau 12 est logé dans le méplat 19 du cache 15 de sorte à être recouvert au moins par la première face principale 17 pour une personne regardant de face le porteur de lunettes 1.

De préférence, les méplats 19 du cache 15 et du plateau 12 sont en vis-à-vis voire sont accolés.

Ceci facilite la mise en place du pion 16.

De préférence, le pion 14 s'étend dans l'orifice 6 de sorte que l'axe M soit parallèle au deuxième axe X. De préférence, le pion 14 s'étend dans l'orifice 6 de sorte que l'axe C et/ou l'axe T soit parallèle au premier axe Z. De préférence, le pion 14 s'étend dans l'orifice 6 de sorte que l'axe C et/ou l'axe T soit parallèle à l'axe D.

Le procédé de montage de l'extrémité libre 9 de la première partie 5 du tenon 4 va être à présent décrit.

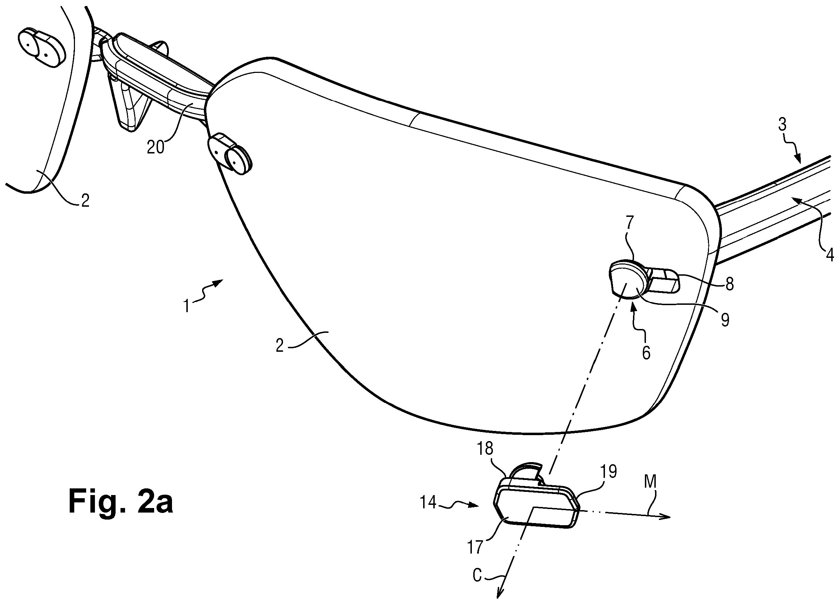

En référence à la figure 2a, au cours d'une première étape, on vient insérer l'extrémité libre 9 dans la portion d'introduction 7 de l'orifice 6 selon un mouvement sensiblement perpendiculaire au verre 2 depuis la face arrière du verre 2 vers la face avant du verre 2. Le doigt 11 s'étend ici parallèlement au premier axe Z.

L'extrémité libre 9 est alors agencée de sorte à s'étendre au travers de l'orifice 6 selon le premier axe Z, la zone d'attache 10 reposant contre la face arrière du verre 2.

On note que ceci facilite le positionnement pour l'utilisateur qui enfonce l'extrémité libre 9 dans l'orifice 6 jusqu'à ce que la zone d'attache 10 vienne en butée contre la face arrière du verre 2.

Dans cette position, le plateau 12 ressort de l'orifice 6 au niveau de la face avant du verre 2.

On note par ailleurs que le méplat 13 est agencé dans l'orifice 6 de sorte à être tourné vers la première extrémité latérale de la portion d'introduction 7.

En référence à la figure 2b, on coulisse l'extrémité libre 9 dans l'orifice 6 jusqu'à ce que le doigt 11 vienne en butée contre la deuxième extrémité latérale de la portion de positionnement 8.

On comprend donc que l'orifice 6 fait office de rainure pour l'extrémité libre 9 et facilite ainsi son déplacement de la portion d'introduction 7 à la portion de positionnement 8.

Dans cette position le plateau 12 est en appui contre la face avant du verre 2 et/ou la zone d'attache 10 est en appui contre la face arrière du verre 2.

Ceci limite un déplacement relatif de l'extrémité libre 9 du tenon (et donc de la branche) vis-à-vis du verre 2 notamment selon le premier axe Z.

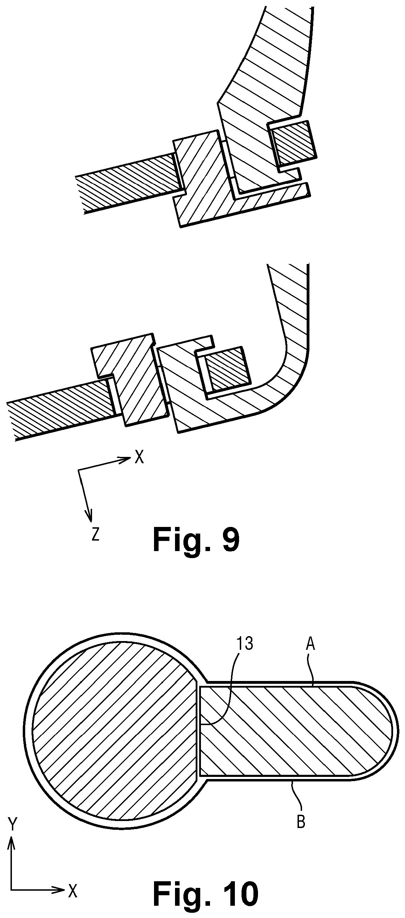

Comme indiqué précédemment, la section du doigt 11 présente une forme épousant au moins en partie celle de la portion de positionnement 8. Dans le cas présent, comme plus visible à la figure 10, la section du doigt 11 est de forme oblongue de sorte qu'elle présente deux méplats (A et B) en vis-à-vis respectivement de parties planes de l'orifice 6.

Ceci limite une rotation du tenon 4 dans l'orifice 6 selon le premier axe Z.

En outre, le doigt 11 est en appui contre les extrémités longitudinales et la deuxième extrémité latérale de la portion de positionnement 8.

Ceci limite un déplacement relatif de l'extrémité libre 9 (et donc de la branche) vis-à-vis du verre 2 notamment selon le deuxième axe X et un troisième axe Y (orthogonal au premier axe Z et au deuxième axe X).

En référence à la figure 2c, on vient alors positionner le pion 14 dans la portion d'introduction 7 selon un mouvement sensiblement perpendiculaire au verre 2 depuis la face avant du verre 2 vers la face arrière du verre 2.

Le pion 14 est alors agencé de sorte à s'étendre au travers de l'orifice 6 selon le premier axe Z, la deuxième face principale 18 du cache 15 reposant contre la face avant du verre 2.

On note que ceci facilite le positionnement pour l'utilisateur qui enfonce le pion 14 dans l'orifice 6 jusqu'à ce que la deuxième face principale 18 de son cache 15 vienne en butée contre la face avant du verre 2.

Cette coopération du pion 14 avec l'orifice 6 d'une part et l'extrémité libre 9 (et donc de la branche) d'autre part permet de limiter un déplacement de ladite extrémité libre 9 notamment selon le deuxième axe X.

En particulier, la coopération entre le méplat 13 et la partie plane 26 limite une rotation du pion 14 autour de son axe T dans l'orifice 6.

Dans cette position, le pion 14 et l'extrémité libre 9 sont tous deux en appui direct contre au moins une portion de l'orifice 6. En particulier, le pion 14 est en appui direct (i.e. sans pièce intermédiaire) contre au moins une portion de la portion d'introduction 7 et l'extrémité libre 9 est en appui direct (i.e. sans pièce intermédiaire) contre au moins une portion de la portion de positionnement 8. Le pion 14 permet en particulier de presser l'extrémité libre 9 contre au moins un bord définissant l'orifice 6 et dans le cas présent de presser l'extrémité libre 9 contre le verre.

De préférence, au moins une portion du pion 14 est conformée pour épouser la forme d'une portion en regard de la portion d'introduction 7 et au moins une portion de l'extrémité libre 9 est conformée pour épouser la forme d'une portion en regard de la portion de positionnement 8. On comprend donc que le pion 14 bloque l'extrémité libre 9 dans la portion de positionnement 8. Le pion 14 a ainsi pour fonction de bloquer l'extrémité libre 9 dans l'orifice 6 mais non de positionner le pion 14 dans l'orifice 6. En effet, comme visible à la figure 2b, l'extrémité libre 9 se positionne seule dans la portion de positionnement 8 sans besoin que le pion 14 ne la porte. De même le pion 14 se positionne seul dans la portion de positionnement 8 sans que l'extrémité libre 9 n'ait besoin de la porter.

On comprend donc que l'extrémité libre 9 comme le pion 14 se maintiennent seuls indépendamment l'un de l'autre dans l'orifice 6. La coopération de ces deux pièces permet juste de les bloquer en position dans l'orifice 6.

Le montage de l'extrémité libre 9 est ainsi simple et rapide.

En outre, ce montage est réversible puisqu'il suffit de retirer le pion 14 et de déplacer l'extrémité libre 9 de la portion de positionnement 8 à la portion d'introduction 7 pour la retirer de la paire de lunettes 1.

En référence de nouveau à la figure 1, on comprend que ce qui a été dit ci-dessus pour le tenon (et donc la branche), est tout aussi bien applicable à un autre élément de lunettes comme le pontet 20 c'est-à-dire la partie reposant sur le nez de l'utilisateur. On retient que dans le cas présent, le pontet 20 est l'élément de lunettes 1 qui permet aussi de solidariser les deux verres entre eux.

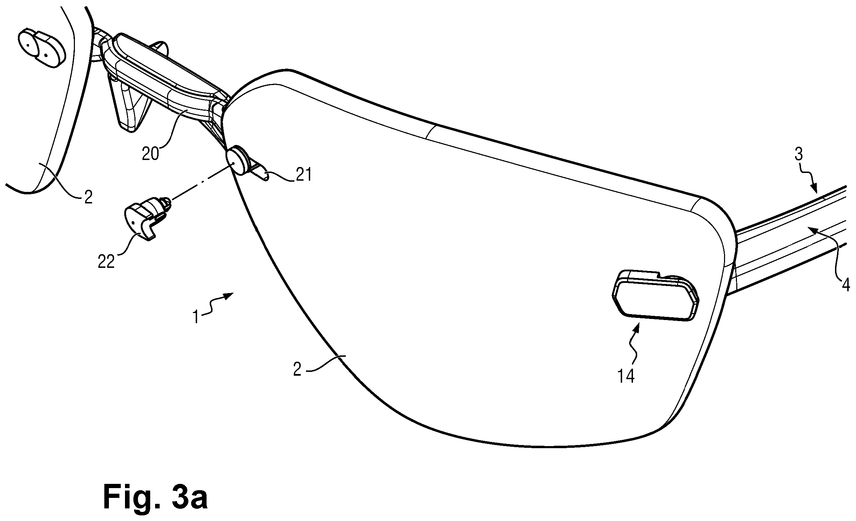

De la sorte, comme illustré à la figure 3a, au cours d'une première étape, on vient insérer l'extrémité du pontet 20 dans la portion d'introduction d'un orifice 21 (identique dans le cas présent à celui ménagé pour le tenon et orientée de la même manière) selon un mouvement sensiblement perpendiculaire au verre 2 depuis la face arrière du verre 2 vers la face avant du verre 2.

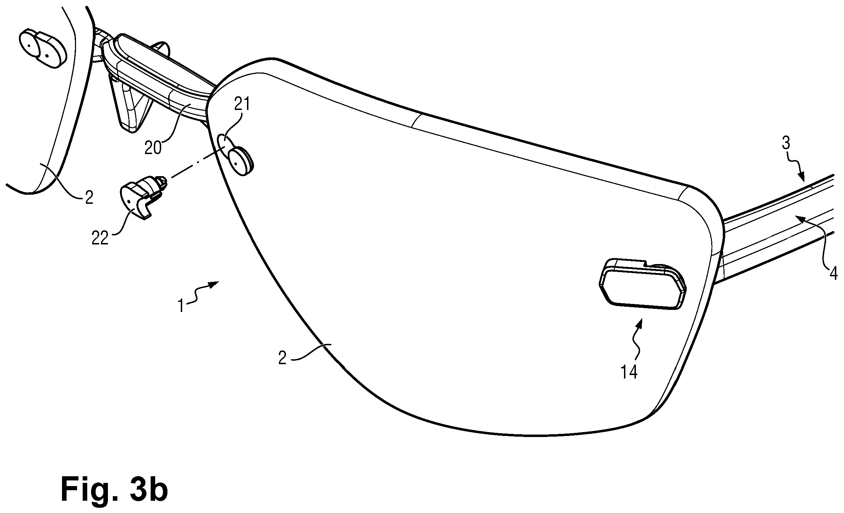

En référence à la figure 3b, on coulisse l'extrémité du pontet 20 dans l'orifice 21 jusqu'à ce que l'extrémité du pontet vienne en butée contre l'extrémité latérale de la portion de positionnement de l'orifice.

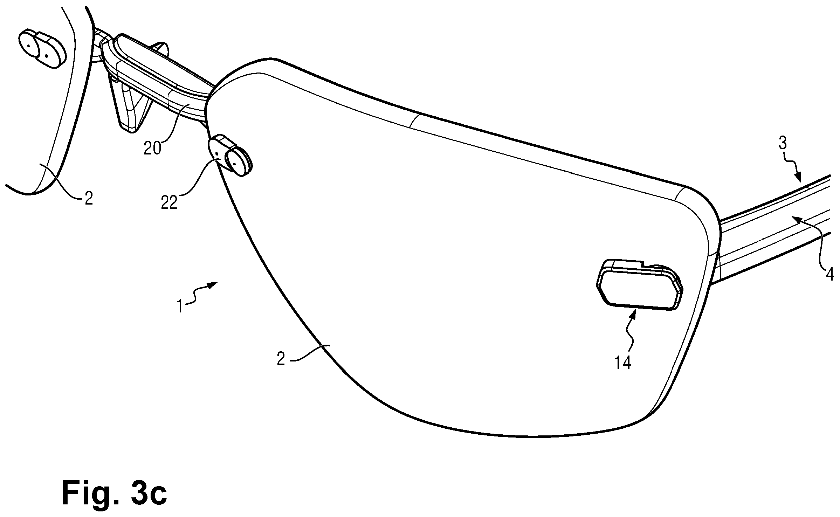

En référence à la figure 3c, on vient alors positionner le pion 22 dans la portion d'introduction de l'orifice 21 selon un mouvement sensiblement perpendiculaire au verre 2 depuis la face avant du verre 2 vers la face arrière du verre 2.

La coopération de l'extrémité du pontet 20 avec le pion 14 et l'orifice 21 permet ainsi de bloquer le pontet 20 en position dans la paire de lunettes.

Bien entendu, l'invention n'est pas limitée au mode de réalisation décrit mais englobe toute variante entrant dans le champ de l'invention telle que définie par les revendications.

En particulier, la forme du pion et/ou de l'orifice et/ou de l'élément de lunettes pourra être différente de celle indiquée.

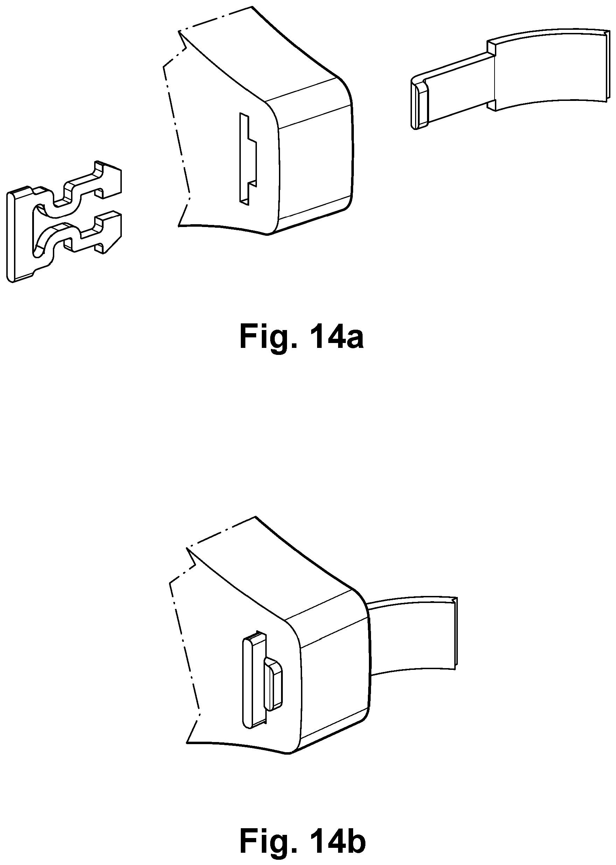

Par exemple, en référence aux figures 14a et 14b, l'extrémité libre présente bien un doigt prolongé d'un plateau comme dans le mode de réalisation décrit. Néanmoins, le doigt est alors conformé en une première languette et le plateau en une autre languette de plus petites dimensions. Au moins l'une des languettes peut être formée ou fabriquée à partir d'une tôle telle qu'une tôle en matière métallique. De même, si l'orifice comporte toujours la portion d'introduction et la portion de positionnement, la section de l'orifice (selon un plan de section de normale le premier axe Z) est telle que la portion d'introduction a une section au moins partiellement rectangulaire et la portion de positionnement est de section au moins partiellement rectangulaire avec une première extrémité latérale de la portion de positionnement débouchant dans la portion d'introduction, la portion de positionnement étant de plus petites dimensions que la portion d'introduction. De même le pion d'attache présente une forme plus linéaire que ce qui a été précédemment décrit. Par exemple le pion d'attache est généralement conformé en une plaquette dont les faces principales sont destinées à s'étendre à travers l'orifice. La plaquette est par exemple formée ou fabriquée à partir d'une tôle telle qu'une tôle en matière métallique. Le cache du pion d'attache forme l'avant de la plaquette et la partie d'attache forme l'arrière et les côtes de la plaquette. La partie d'attache comporte par exemple au moins une patte d'encliquetage destinée à s'étendre à travers l'orifice pour venir se bloquer à l'arrière de la paire de lunettes et de préférence au moins deux telles pattes formant conjointement une pince d'encliquetage. L'orientation de l'orifice est verticale aux figures 14a et 14b mais cela n'est évidemment pas limitatif et l'orientation de l'orifice pourra être horizontale.

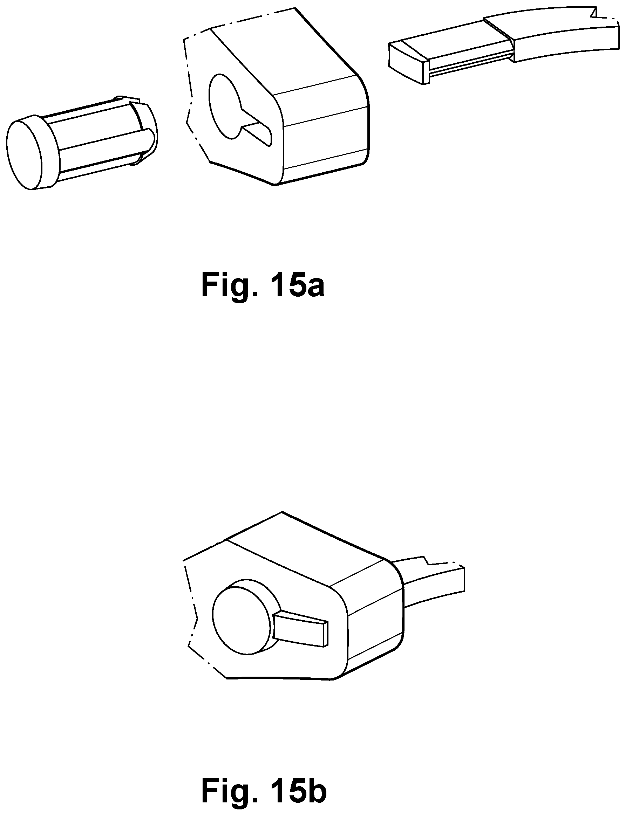

Par exemple, en référence aux figures 15a et 15b, l'extrémité libre présente bien un doigt prolongé d'un plateau comme dans le mode de réalisation décrit. Néanmoins, le doigt est alors conformé en une première languette et le plateau en une autre languette de plus petites dimensions. Au moins l'une des languettes peut être formée ou fabriquée à partir d'une tôle telle qu'une tôle en matière métallique. De même, si l'orifice comporte toujours la portion d'introduction et la portion de positionnement, la section de l'orifice (selon un plan de section de normale le premier axe Z) est telle que la portion d'introduction a une section au moins partiellement circulaire et la portion de positionnement est de section au moins partiellement rectangulaire avec une première extrémité latérale de la portion de positionnement débouchant dans la portion d'introduction, la portion de positionnement étant de plus petites dimensions que la portion d'introduction. Le pion d'attache présente un cache dont la section est circulaire. Le pion d'attache est en matière plastique. L'orientation de l'orifice est horizontale aux figures 15a et 15b mais cela n'est évidemment pas limitatif et l'orientation de l'orifice pourra être verticale.

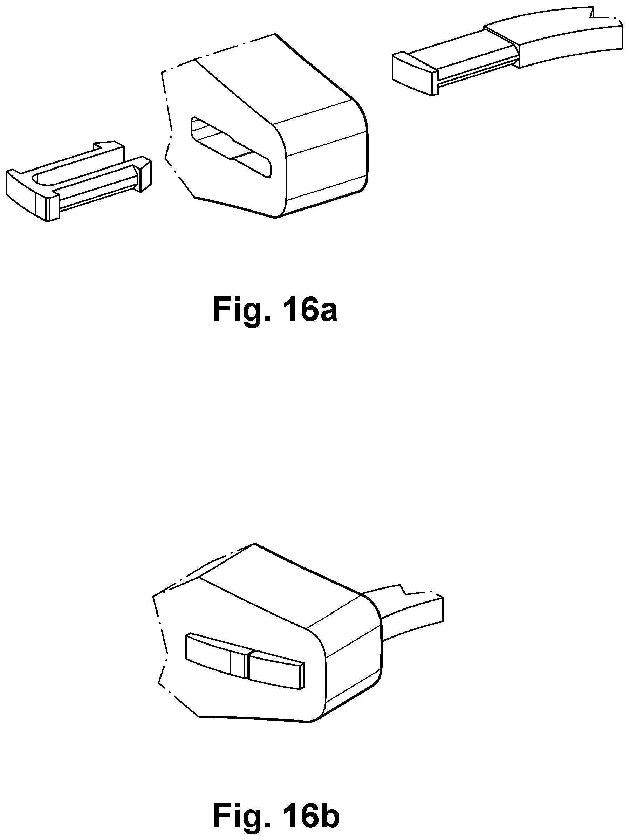

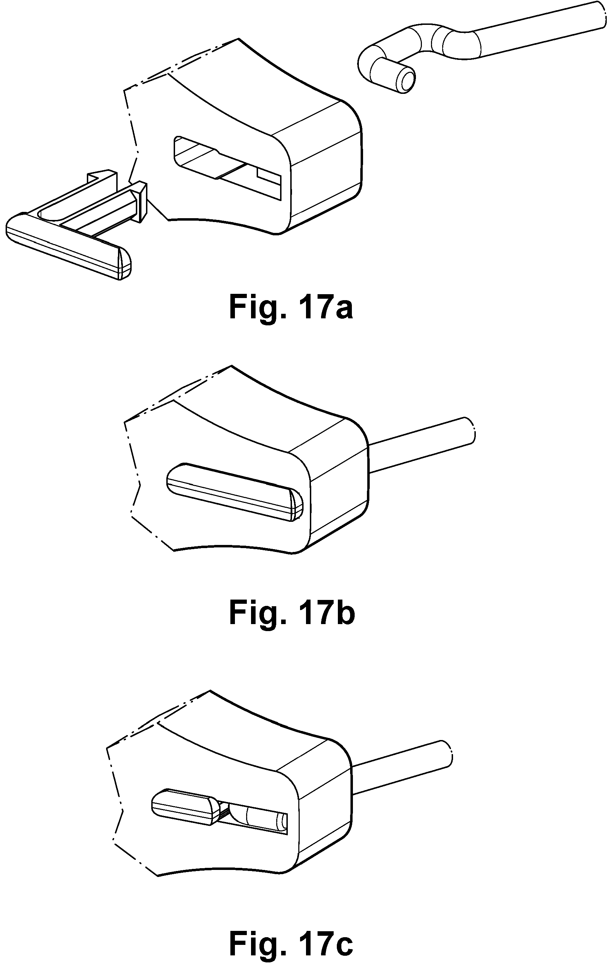

Les figures 16a et 16b illustrent une variante proche de celle associé aux figures 17a et 17b aux différences près suivantes :
- l'orientation de l'orifice est horizontale mais non verticale, la portion de positionnement se trouvant agencée dans le prolongement de la portion d'introduction selon l'axe X,
- la au moins une patte d'encliquetage du pion d'attache est droite et non en zig-zag.

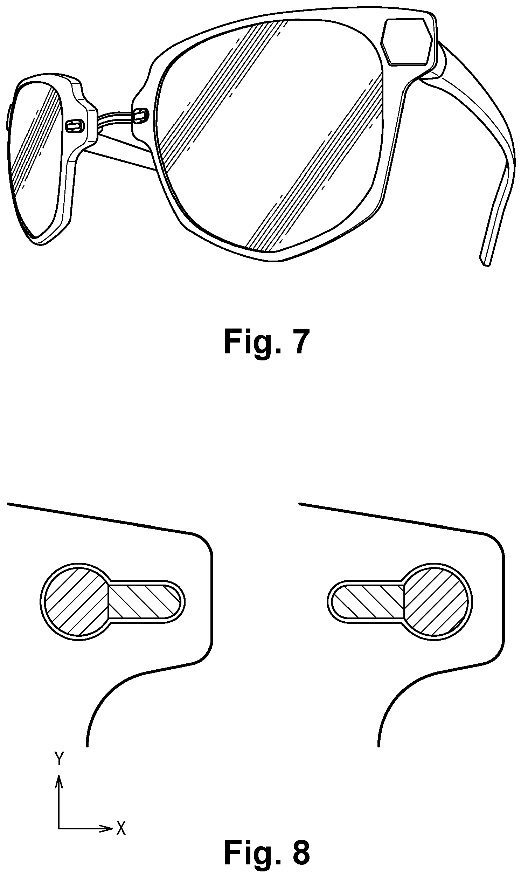

Par exemple, en référence aux figures 17a à 17c, l'extrémité libre est conformée en un crochet. De même, si l'orifice comporte toujours la portion d'introduction et la portion de positionnement, la section de l'orifice (selon un plan de section de normale le premier axe Z) est telle que la portion d'introduction a une section au moins partiellement rectangulaire et la portion de positionnement est de section au moins partiellement rectangulaire avec une première extrémité latérale de la portion de positionnement débouchant dans la portion d'introduction, la portion de positionnement étant de plus petites dimensions que la portion d'introduction. L'orifice est par ailleurs muni d'une base s'étendant au moins dans une partie de la portion de positionnement, l'extrémité libre venant entourer la base pour se maintenir dans la position. De même le pion d'attache présente une forme plus linéaire que ce qui a été précédemment décrit. Par exemple le pion d'attache est généralement conformé en une plaquette dont les faces principales sont destinées à s'étendre à travers l'orifice. La plaquette est par exemple formée ou fabriquée à partir d'une tôle telle qu'une tôle en matière métallique. Le cache du pion d'attache forme l'avant de la plaquette et la partie d'attache forme l'arrière et les côtes de la plaquette. La partie d'attache comporte par exemple au moins une patte d'encliquetage destinée à s'étendre à travers l'orifice pour venir se bloquer à l'arrière de la paire de lunettes et de préférence au moins deux telles pattes formant conjointement une pince d'encliquetage. La patte peut être droite ou en zig-zag. Le cache peut venir recouvrir en totalité l'extrémité d'attache au niveau de la face avant de la paire de lunettes (comme illustrée à la figure 17b) ou uniquement partiellement ou peut ne pas recouvrir l'extrémité d'attache au niveau de la face avant de la paire de lunettes (comme illustrée à la figure 17c). L'orientation de l'orifice est horizontale aux figures 17aà 17c mais cela n'est évidemment pas limitatif et l'orientation de l'orifice pourra être verticale. Bien qu'ici la paire de lunettes soit dépourvue de monture, la paire de lunettes pourra comporter une monture. L'élément de lunettes pourra alors être porté soit par le verre soit par la monture. Si l'élément de lunettes est porté par la monture, l'orifice associé à l'élément de lunettes sera alors ménagé dans la monture directement de manière à traverser ladite monture. Tout ce qui a été dit précédemment pour le montage de l'élément directement sur le verre est ainsi applicable au mode de réalisation où l'élément est monté directement sur la monture. La figure 7 illustre ainsi une telle paire de lunettes pour laquelle la branche est montée sur la monture par l'intermédiaire d'un pion de verrouillage.

Que la paire de lunettes comporte une monture ou ne comporte pas de monture, la paire de lunettes pourra comporter deux verres ou bien un seul verre. Dans les deux cas, l'élément de lunettes pourra être porté par le verre ou par la monture (si la paire de lunettes en possède une). Si c'est la monture qui porte l'élément, l'orifice sera alors ménagé dans cette dernière et non plus dans le verre directement. La figure 7 illustre une telle paire de lunettes.

L'orifice pourra prendre une autre forme que celle indiquée. Par exemple la portion d'introduction pourra être conformée en une section en ovale, rectangulaire (comme aux figures 14a et 14b, aux figures 16a et 16b, aux figures 17a et 17b et 17c), oblongue ... et/ou la portion de positionnement pourra être conformée en une section en ovale, rectangulaire (comme aux figures 14a et 14b et aux figures 15a et 15b, aux figures 16a et 16b, aux figures 17a et 17b et 17c), oblongue ...

L'orientation de l'orifice pourra également être différent de ce qui a été indiqué. Par exemple, l'orifice pourra s'étendre (que l'on considère le montage d'un tenon ou d'un pontet) de sorte que la portion d'introduction se trouve à droite de la portion de positionnement ou bien pourra s'étendre de sorte que la portion d'introduction se trouve à gauche de la portion de positionnement. La figure 8 illustre ainsi deux possibilités d'orientation de l'orifice. Par exemple l'orifice pourra s'étendre sensiblement à la verticale (lorsque la paire de lunettes est portée par l'utilisateur) au lieu de s'étendre sensiblement à l'horizontale comme ce qui a été décrit. Là encore la portion d'introduction pourra s'étendre au-dessus de la portion de positionnement ou en dessous. L'orifice pourra s'étendre sensiblement à l'oblique (lorsque la paire de lunettes est portée par l'utilisateur), la portion d'introduction pouvant être plus proche d'un bord externe de la paire de lunettes que la portion de positionnement ou plus éloignée.

Bien qu'ici le cache présente une section transversale en un polygone, la section pourra être d'une autre forme et par exemple oblongue ou circulaire. Si la section est en polygone, elle pourra toujours avoir une forme différente d'un quadrilatère et être par exemple conformée en un triangle, un hexagone ... Indifféremment de la forme de la section transversale, celle-ci pourra présenter au moins un angle arrondi.

Bien qu'ici le pion comporte un cache recouvrant totalement l'extrémité libre de l'élément de lunettes côté face avant du verre, le cache pourra être conformé pour ne recouvrir que partiellement ladite extrémité libre (côté face avant du verre) comme illustré à la figure 15b par exemple ou pourra être conformé pour ne pas recouvrir ladite extrémité libre (côté face avant du verre) comme illustré à la figure 14b ou à la figure 17c par exemple.

La partie d'attache pourra être conformée différemment de ce qui a été indiqué. Par exemple la partie d'attache pourra comporter une patte d'encliquetage, une tige prolongée d'un retour pliable de sorte à s'étendre soit dans le prolongement de la tige soit obliquement ou perpendiculairement à la tige ..., la patte et/ou la tige étant destinée à demeurer dans l'orifice pour bloquer l'extrémité libre de l'élément de lunettes en position en venant en appui contre la face arrière du verre pour solidariser l'ensemble (dans le cas de la tige, c'est son retour qui vient en appui contre la face arrière du verre pour solidariser l'ensemble).

Bien qu'ici l'élément de lunettes soit monté par la face arrière du verre (et le pion associé par la face avant du verre), le montage pourra être inversé. L'élément de lunettes sera ainsi introduit dans l'orifice depuis la face avant du verre en direction de la face arrière du verre et le pion sera introduit dans l'orifice depuis la face arrière du verre en direction de la face avant du verre. La figure 9 illustre ainsi les deux possibilités de montage qui viennent d'être décrites.

Le tenon et/ou la branche et/ou le pontet pourront être dans différentes matières comme en matière synthétique, en matière plastique, en matière métallique ...

De la même manière la monture, si elle existe, pourra être dans différentes matières comme en matière synthétique, en matière plastique, en matière métallique ...

De la même manière le pion pourra être dans différentes matières comme en matière synthétique, en matière plastique, en matière métallique ...

Le pion pourra être dans le même matériau que l'élément de lunettes associé ou bien être dans un autre matériau.

La monture, si elle existe, pourra entourer extérieurement le ou les verres ou bien n'entourer que partiellement le ou les verres.

La monture de lunettes pourra ne comporter qu'un seul verre.

L'élément de lunettes pourra être un pontet, une branche, un tenon, un ensemble latéral ...

Le pion sera maintenu en place dans l'orifice sans moyen de fixation additionnel et par exemple soit en y étant encliqueté soit par simple ajustement. En variante ou en complément, le pion pourra être maintenu en place dans l'orifice via des moyens de fixation additionnels comme par exemple un ensemble vis-écrou. En variante ou en complément une extrémité libre du pion pourra être conformé pour coopérer avec un élément empêchant le retrait du pion de l'orifice. Par exemple l'extrémité libre du pion pourra être filetée de sorte à coopérer avec un écrou (par exemple introduit par la face arrière du verre) monté sur le pion une fois celui-ci en place dans l'orifice - l'écrou empêchant alors le retrait du pion de l'orifice. On comprend que dans tous les cas, l'élément de lunettes comme le pion sont montés sur la paire de lunettes de manière démontable.

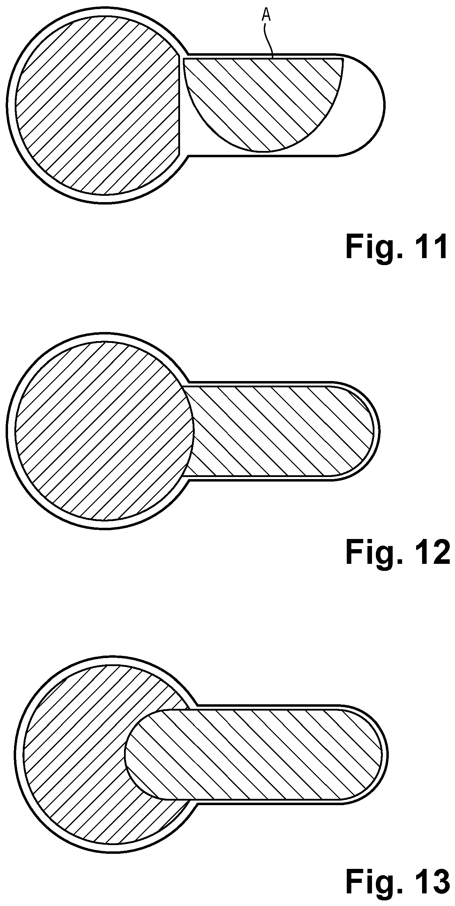

Bien qu'ici le pion et l'élément de lunettes présente des méplats en regard, le pion et l'élément de lunettes pourront comporter d'autres surfaces en regard. Le pion et l'élément de lunettes pourront ainsi comporter des surfaces complémentaires de sorte que le pion et l'élément de lunettes s'emboitent au moins partiellement lorsque le pion et l'élément de lunettes sont en place dans l'orifice. La figure 12 propose ainsi un agencement dans lequel le pion présente une section (de plan de section l'axe T) qui soit extérieurement circulaire et la portion en regard de l'élément de lunettes comporte une goulotte permettant de loger ledit pion. La figure 13 propose ainsi un agencement dans lequel le pion présente une section (de plan de section l'axe T) présentant une goulotte dans laquelle est logée une portion arrondie en regard de l'élément de lunettes. L'élément de lunettes pourra ainsi présenter une section au niveau de l'orifice qui soit entièrement oblongue.

Le pion et l'élément de lunettes pourront ne pas comporter de surfaces complémentaires. Le pion pourra ainsi être conformé de sorte à être libre en rotation autour de son axe T. Par exemple le pion pourra présenter une section (de plan de section l'axe T) qui soit extérieurement circulaire. Le pion pourra ainsi être dépourvu de cale et/ou la cale pourra être dépourvue d'une partie plane et/ou le pion pourra être dépourvu du méplat.

Bien qu'ici l'orifice et l'élément de lunettes présente une ou des surfaces complémentaires, l'orifice et l'élément de lunettes pourront comporter d'autres surfaces en regard. Par exemple, comme visible à la figure 11, l'élément pourra être conformé de sorte que sa section au niveau de l'orifice (de plan de section l'axe Z) présente une seule zone épousant celle de l'orifice. Par exemple, ladite zone pourra être un méplat A épousant la partie plane correspondante de l'orifice. La zone opposée au méplat pourra par exemple être en arc de cercle. On comprendra que pour le confort de la personne portant la paire de lunettes, on veillera à s'assurer que l'élément de lunettes ne puisse pas être libre en rotation dans l'orifice autour de l'axe Z une fois le pion en place.

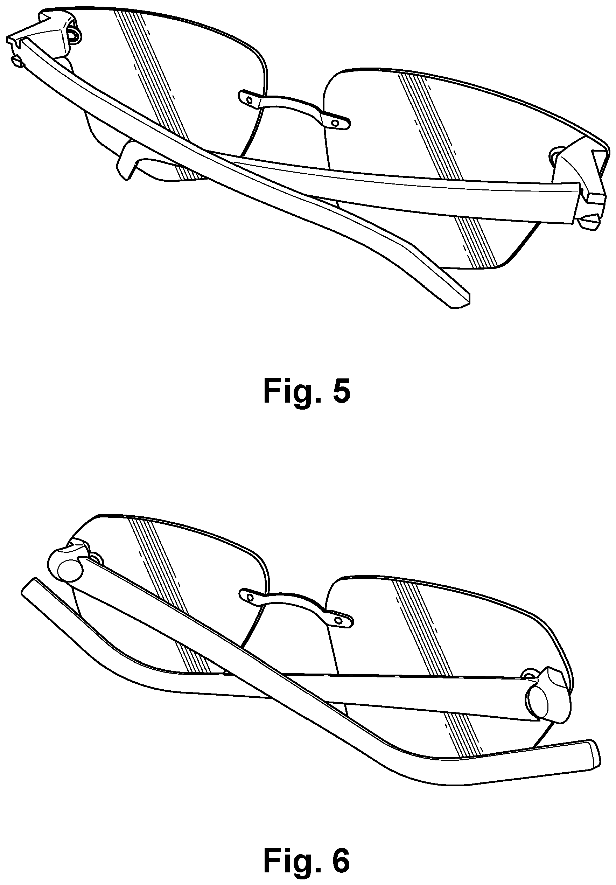

Si l'élément de lunettes est une branche, ladite branche pourra être d'une seule pièce avec la deuxième partie du tenon, la liaison de la branche au tenon se faisant au niveau de la charnière. Une telle paire de lunettes est illustrée à la figure 5. En variante la branche sera rapportée sur la deuxième partie. En variante encore la branche et le tenon seront d'une seule pièce. Il n'y aura alors pas de charnière permettant de rabattre la branche. En variante, ladite pièce formant conjointement branche et tenon sera suffisamment souple pour assurer de manière intrinsèque la fonction charnière. Si une fonction charnière est présente dans la paire de lunettes, la branche pourra alors se rabattre selon un mouvement de rotation selon un axe ou pourra se rabattre selon un autre mouvement comme par exemple un mouvement combinant au moins deux rotations ou une rotation et une translation. La paire de lunettes pourra ainsi présenter une charnière comme par exemple celle décrite par la présente demanderesse dans la demande FR 2 844 062.

## Revendications

1. Paire de lunettes (1) comprenant un élément de lunettes (3, 20) monté sur une monture de ladite paire de lunettes ou sur un verre de ladite paire de lunettes, le verre ou la monture comportant au moins un orifice (6, 21) pourvu d'une portion d'introduction (7) pour l'introduction de l'élément à travers l'orifice, portion d'introduction prolongée par une portion (8) rétrécie de positionnement de l'élément dans le verre ou la monture, l'orifice étant ménagé de sorte à déboucher sur une face avant du verre ou de la monture et sur une face arrière du verre ou de la monture,
la paire de lunettes comprenant par ailleurs un pion de verrouillage (14, 22) agencé dans l'orifice de sorte à s'étendre au moins à travers la portion d'introduction entre l'élément d'une part et le verre ou la monture d'autre part pour bloquer l'élément dans la paire de lunettes,
dans laquelle le pion de verrouillage bloque l'élément de lunettes dans la portion de positionnement,
dans laquelle l'élément de lunettes est en appui contre au moins un bord de la portion de positionnement.

2. Paire de lunette selon la revendication 1, dans laquelle l'élément de lunettes est un tenon (5) ou un pontet (20).

3. Paire de lunettes selon la revendication 1 ou la revendication 2, dans laquelle l'orifice (6) est conformé en un trou de serrure.

4. Paire de lunettes selon l'une des revendications 1 à 3, dans laquelle la portion de positionnement (8) est agencée plus vers l'extérieur du verre ou de la monture que la portion d'introduction (7).

5. Paire de lunettes selon l'une des revendications 1 à 4, dans laquelle le pion de verrouillage (14) recouvre au moins en partie une portion de l'élément de lunettes dépassant d'une face avant de la paire de lunettes.

6. Paire de lunettes selon la revendication 5, dans laquelle le pion de verrouillage (14) comporte au moins un logement dans lequel est reçu la portion de l'élément.

7. Paire de lunettes selon l'une des revendications 1 à 6, dans laquelle le pion de verrouillage (14, 22) comporte au moins une surface complémentaire d'au moins une surface de l'élément de lunettes.

8. Paire de lunettes selon la revendication 7, dans laquelle le pion de verrouillage (14, 22) et l'élément de lunettes s'emboitent au moins en partie l'un dans l'autre.

9. Paire de lunettes selon l'une des revendications précédentes, dans laquelle l'élément de lunettes comporte un doigt (11) conformé pour épouser au moins en partie la forme d'un bord latéral de la portion de positionnement (8).

10. Procédé de montage d'un élément de lunettes sur une paire de lunettes selon l'une des revendications précédentes, le procédé comportant les étapes de :
- agencer l'élément de lunettes à travers la portion d'introduction (7),
- déplacer l'élément de lunettes le long de l'orifice de sorte qu'il s'étende à travers la portion de positionnement (8),
- placer le pion de verrouillage (14, 21) au niveau de la portion d'introduction.

## Patentansprüche

1. Brille (1), umfassend ein Brillenelement (3, 20), das an einer Brillenfassung bzw. einem Brillenglas angebracht ist, wobei das Brillenglas bzw. die Brillenfassung zumindest eine Öffnung (6, 21) mit einem Einführabschnitt (7) zum Einführen des Elements durch die Öffnung hindurch und mit einem daran anschließenden, verengten Positionierabschnitt (8) zum Positionieren des Elements in dem Glas bzw. in der Fassung enthält, wobei die Öffnung derart ausgebildet ist, dass sie in eine Vorderseite des Glases bzw. der Fassung sowie in eine Rückseite des Glases bzw. der Fassung ausmündet,
wobei die Brille außerdem einen Verriegelungsstift (14, 22) umfasst, welcher derart in der Öffnung angeordnet ist, dass er sich zumindest durch den Einführabschnitt hindurch zwischen einerseits dem Brillenelement und andererseits dem Glas bzw. der Fassung erstreckt und so das Element in der Brille fixiert,
wobei der Verriegelungsstift das Brillenelement in dem Positionierabschnitt fixiert,
wobei das Brillenelement an zumindest einem Rand des Positionierabschnitts anliegt.

2. Brille nach Anspruch 1, wobei es sich bei dem Brillenelement um einen Zapfen (5) bzw. um eine Brücke (20) handelt.

3. Brille nach Anspruch 1 oder nach Anspruch 2, wobei die Öffnung (6) als eine schlüssellochförmige Öffnung ausgebildet ist.

4. Brille nach einem der Ansprüche 1 bis 3, wobei der Positionierabschnitt (8) weiter zu dem Außenrand des Glases bzw. der Fassung hin angeordnet ist als der Einführabschnitt (7).

5. Brille nach einem der Ansprüche 1 bis 4, wobei der Verriegelungsstift (14) zumindest teilweise einen Abschnitt des Brillenelements abdeckt, der über eine Vorderseite der Brille hinausragt.

6. Brille nach Anspruch 5, wobei der Verriegelungsstift (14) zumindest eine Aufnahme enthält, in welcher besagter Abschnitt des Brillenelements aufgenommen ist.

7. Brille nach einem der Ansprüche 1 bis 6, wobei der Verriegelungsstift (14, 22) zumindest eine Fläche enthält, welche komplementär zu zumindest einer Fläche des Brillenelements ausgebildet ist.

8. Brille nach Anspruch 7, wobei der Verriegelungsstift (14, 22) und das Brillenelement zumindest teilweise ineinanderrasten.

9. Brille nach einem der vorhergehenden Ansprüche, wobei das Brillenelement einen Finger (11) enthält, welcher derart ausgebildet ist, dass er sich zumindest teilweise an die Form eines Seitenrands des Positionierabschnitts (8) anpasst.

10. Verfahren zur Montage eines Brillenelements an einer Brille nach einem der vorhergehenden Ansprüche, wobei das Verfahren die Schritte enthält, dass:
- das Brillenelement durch den Einführabschnitt (7) hindurch in Position gebracht wird,
- das Brillenelement derart entlang der Öffnung verschoben wird, dass es sich durch den Positionierabschnitt (8) hindurch erstreckt,
- der Verriegelungsstift (14, 21) im Bereich des Einführabschnitts eingesetzt wird.

## Claims

1. A pair of eyeglasses (1) comprising an eyeglass element (3, 20) mounted on a frame of said pair of eyeglasses or on a lens of said pair of eyeglasses, the lens or the frame comprising at least one orifice (6, 21) provided with an introducing portion (7) for introducing the element through the orifice, the introducing portion being extended by a narrowed portion (8) for positioning the element in the lens or the frame, the orifice being provided in a manner such as to open onto a front face of the lens or the frame and onto a rear face of the lens or the frame,
the pair of eyeglasses further comprising a locking peg (14, 22) disposed in the orifice in a manner such as to extend at least through the introducing portion between the element on the one hand and the lens or the frame on the other hand in order to lock the element in the pair of eyeglasses,
the locking peg locking the eyeglass element in the positioning portion,
the eyeglass element bearing against at least one edge of the positioning portion.

2. The pair of eyeglasses as claimed in claim 1, in which the eyeglass element is a tenon (5) or a bridge (20).

3. The pair of eyeglasses as claimed in claim 1 or claim 2, in which the orifice (6) is in the shape of a keyhole.

4. The pair of eyeglasses as claimed in one of claims 1 to 3, in which the positioning portion (8) is disposed further towards the outside of the lens or the frame than the introducing portion (7).

5. The pair of eyeglasses as claimed in one of claims 1 to 4, in which the locking peg (14) covers at least a portion of the eyeglass element protruding from a front face of the pair of eyeglasses.

6. The pair of eyeglasses as claimed in claim 5, in which the locking peg (14) comprises at least one housing in which the portion of the element is received.

7. The pair of eyeglasses as claimed in one of claims 1 to 6, in which the locking peg (14, 22) comprises at least one surface that is complementary to at least one surface of the eyeglass element.

8. The pair of eyeglasses as claimed in claim 7, in which at least a portion of the locking peg (14, 22) and the eyeglass element interlock with each other.

9. The pair of eyeglasses as claimed in of the preceding claims, in which the eyeglass element comprises a finger (11) shaped to at least partially follow the shape of a lateral edge of the positioning portion (8).

10. A method for mounting an eyeglass element on a pair of eyeglasses as claimed in one of the preceding claims, the method comprising the steps of:
disposing the eyeglass element through the introducing portion,
displacing the eyeglass element along the orifice in a manner such that it extends through the positioning portion (8),
placing the locking peg (14, 21) at the level of the introducing portion.
